(19) **Europäisches Patentamt / European Patent Office / Office européen des brevets**

(11) **EP 4 610 488 A1**

(12) # EUROPÄISCHE PATENTANMELDUNG

(43) Veröffentlichungstag:
**03.09.2025   Patentblatt 2025/36**

(21) Anmeldenummer: **24160108.7**

(22) Anmeldetag: **27.02.2024**

(51) Internationale Patentklassifikation (IPC):
**F03D 17/00** *(2016.01)*      **F03D 7/04** *(2006.01)*

(52) Gemeinsame Patentklassifikation (CPC):
**F03D 17/006;** F03D 7/045; F03D 7/046;
F03D 9/257; F05B 2240/96; F05B 2260/8211;
F05B 2260/84; F05B 2270/32

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Wobben Properties GmbH**
**26607 Aurich (DE)**

(72) Erfinder:
• **Berger, Frederik**
  **26607 Aurich (DE)**
• **Damminger, Milan**
  **26607 Aurich (DE)**
• **Homeyer, Tim**
  **26607 Aurich (DE)**
• **Brüdgam, Michael**
  **26607 Aurich (DE)**

(74) Vertreter: **Eisenführ Speiser**
**Patentanwälte Rechtsanwälte PartGmbB**
**Gollierstraße 4**
**80339 München (DE)**

(54) ## VERFAHREN ZUR BEREITSTELLUNG VON WINDDATEN

(57)     Verfahren zur Bereitstellung von Winddaten an einem Vorhersageort, umfassend: Bereitstellen (S101) von Trainingsdatensätzen für mehrere Aufstellorte für Windenergieanlagen, insbesondere umfassend Trainingsdatensätze aus öffentlichen Datenbanken, Vorbereiten (S103) der Trainingsdatensätze für maschinelles Lernen durch Transformieren der Trainingsdatensätze in Features, Trainieren (S105) eines Prädiktionsmodells zur Vorhersage mindestens einer statistischen Windbedingung an einem Vorhersageort auf Grundlage der Features, Erlangen (S107) eines Ziel-Vorhersageortes, insbesondere aus einem CRM System, Vorhersagen (S109) der mindestens einen statistischen Windbedingung am Ziel-Vorhersageort unter Verwendung des trainierten Prädiktionsmodells und Bereitstellen (S111) von Winddaten umfassend die vorhergesagte mindestens eine statistische Windbedingung, insbesondere Bereitstellen der Winddaten für das CRM System.

Fig. 3

EP 4 610 488 A1

**Beschreibung**

Die vorliegende Erfindung betrifft ein Verfahren zur Bereitstellung von Winddaten an einem Vorhersageort.

Windenergieanlagen sind bekannt. Die Effizienz von Windenergieanlagen an bestimmten Standorten hängt maßgeblich von den dort herrschenden Windbedingungen ab. Für unterschiedliche Windbedingungen sind unterschiedliche Anlagenkonfiguration geeignet, so dass die Windbedingungen vorzugsweise bereits vor dem Aufstellen von Windenergieanlagen bekannt sind.

Gleichzeitig dürfen die Windenergieanlagen an bestimmten Aufstellorten keine übermäßigen Lasten erfahren, welche die Integrität und Stabilität der Windenergieanlage gefährden.

Vor diesem Hintergrund war es eine Aufgabe der vorliegenden Erfindung, die an einem Standort der Windenergieanlage herrschenden Windbedingungen möglichst zuverlässig vorherzusagen.

Erfindungsgemäß wird die Aufgabe durch ein Verfahren gemäß Anspruch 1 gelöst. Weitere Ausführungen sind in den Unteransprüchen und nebengeordneten Ansprüchen vorgeschlagen.

Gemäß einem ersten Aspekt der Erfindung wird ein Verfahren zur Bereitstellung von Winddaten an einem Vorhersageort bereitgestellt, umfassend: Bereitstellen von Trainingsdatensätzen für mehrere Aufstellorte für Windenergieanlagen, insbesondere umfassend Trainingsdatensätze aus öffentlichen Datenbanken, Vorbereiten der Trainingsdatensätze für maschinelles Lernen durch Transformieren der Trainingsdatensätze in Features, Trainieren eines Prädiktionsmodells zur Vorhersage mindestens einer statistischen Windbedingung an einem Vorhersageort auf Grundlage der Features, Erlangen eines Ziel-Vorhersageortes, insbesondere aus einem CRM System, Vorhersagen der mindestens einen statistischen Windbedingung am Ziel-Vorhersageort unter Verwendung des trainierten Prädiktionsmodells und Bereitstellen von Winddaten umfassend die vorhergesagte mindestens eine statistische Windbedingung, insbesondere Bereitstellen der Winddaten für das CRM System.

"Maschinelles Lernen", englisch "machine learning", ist ein Oberbegriff für die "künstliche" Generierung von Wissen aus Erfahrung: Ein künstliches System lernt aus Beispielen und kann diese nach Beendigung der Lernphase verallgemeinern. Dazu bauen Algorithmen beim maschinellen Lernen, auch "machine learning Algorithmen" genannt, ein statistisches Modell auf, das auf Trainingsdaten beruht und welches gegen die Testdaten getestet wird. Das heißt, es werden nicht einfach die Beispiele aus den Trainingsdaten auswendig gelernt, sondern es werden Muster und Gesetzmäßigkeiten in den Trainingsdaten erkannt. So kann das System auch unbekannte Daten beurteilen.

Das Bereitstellen von Trainingsdatensätzen umfasst insbesondere jede Art des digitalen Datenaustauschs, insbesondere das Erlangen, Abrufen und Auslesen von Daten aus dem Internet. Beispielsweise werden Trainingsdatensätze aus öffentlichen Datenbanken bereitgestellt.

Die Trainingsdatensätze umfassen dabei insbesondere gemessene und/oder hergeleitete Werte für verschiedenste Windparameter an mehreren Aufstellorten für Windenergieanlagen. Es ist besonders bevorzugt, dass die in den Trainingsdatensätzen enthaltenen Werte für Windparameter mit Ortsangaben über den Ort versehen sind, an dem sie gemessen oder für den sie bestimmt worden sind. Somit ist es möglich einen Wert eines Windparameters aus den Trainingsdatensätzen einem bestimmten Ort zuzuordnen. Des Weiteren umfassen die Trainingsdatensätze insbesondere Durchschnittswerte und/oder Extremwerte für Windparameter an einem Ort, gemessen oder bestimmt über einen gewissen Zeitraum, beispielsweise ein Jahr, fünf Jahre, zehn Jahre, bis hin zu 50 Jahren.

Bevorzugt umfassen die Trainingsdatensätze gemessene und/oder bestimmte Windparameter an Windenergieanlagen. Diese Windparameterwerte wurden beispielsweise durch Sensoren an einer Windenergieanlage gemessen oder anhand von gemessenen Hilfsgrö-ßen für den Standort einer Windenergieanlage bestimmt. Solche Daten besitzen den Vorteil, dass sie Werte für Parameter umfassen, die für den Betrieb einer Windenergieanlage besonders wichtig sind. Des Weiteren beziehen sich diese Daten dadurch auf eine besonders relevante Höhe über dem Boden, nämlich die Höhe in der sich ein Rotor einer Windenergieanlage befindet. Überdies besitzen diese Daten eine besonders genaue Ortsangabe, da der Standort der Windenergieanlage bekannt ist. Hierdurch wird der Aufwand des Vorbereitens der Trainingsdatensätze reduziert und die Genauigkeit der Vorhersage optimiert. Diese Daten von Windenergieanlagen stammen insbesondere aus internen, nichtöffentlichen Datenbanken.

Als Aufstellort für eine Windenergieanlage wird jeder Ort angenommen, an dem potentiell eine Windenergieanlage errichtet werden könnte oder bereits eine Windenergieanlage errichtet ist.

Das Vorbereiten der Trainingsdatensätze für maschinelles Lernen durch Transformieren der Trainingsdatensätze in Features umfasst insbesondere ein Zusammenfassen und Aufbereiten einer Vielzahl von Daten aus unterschiedlichen Datenbanken. Hierbei werden die Daten in Werte einzelner Features transformiert. Die Anzahl der Features ist dabei nicht beschränkt, sondern kann je nach Algorithmus basierend auf maschinellem Lernen, ML-Algorithmus, variieren. Insbesondere sind einige Features vordefiniert während andere anhand der zur Verfügung stehenden Daten ermittelt werden können. Hierfür wird bevorzugt ein weiterer bereits trainierter ML-Algorithmus hinzugezogen.

Ein Feature ist im Kontext dieser Erfindung ein Merkmal, anhand dem Daten sortiert werden können, beispielsweise ein Parameter. Genauer ist ein Feature eine individuelle messbare Eigenschaft oder ein Merkmal eines Phänomens. Die Auswahl informativer, differenzierter und unabhängiger Features ist ein entscheidendes Element wirksamer Algorithmen bei der Mustererkennung, Klassifizierung und Regression. Features sind in der Regel numerisch, können aber auch strukturelle Elemente wie Zeichenketten und Graphen umfassen.

Denkbare Features im Kontext dieser Erfindung sind beispielsweise Höhe über Normal Null, Geländekategorie, Geländebeschaffenheit, Windlastzone, Klimazone, durchschnittlicher Niederschlag, durchschnittliche Temperatur, Extremtemperaturen, Temperaturschwankungen, Pflanzenbewuchs in einem Umkreis um den Vorhersageort, Auftreten von Extremwettersituationen und viele mehr.

Bei einem Prädiktionsmodell handelt es sich im Kontext der Erfindung insbesondere um einen ML-Algorithmus oder ein neurales Netzwerk. Das Prädiktionsmodell wird anhand der Features bezüglich der Genauigkeit der Vorhersage mindestens einer statistischen Windbedingung an einem Vorhersageort trainiert. Das Prädiktionsmodell wird derart trainiert, dass es anhand eines Standorts als Eingabe über die Features der Trainingsdatensätze anhand der Windparameterdaten in den Trainingsdatensätzen mindestens eine statistische Windbedingung an dem Standort bestimmt. Da eine entsprechender gemessener oder bestimmter Wert für diese mindestens eine statistische Windbedingung vorzugsweise in den Trainingsdatensätzen enthalten ist, kann während des Trainings das Ergebnis des Prädiktionsmodells mit den tatsächlich aufgezeichneten Werten verglichen werden. Hierbei wird darauf abgezielt eine Abweichung des Ergebnisses des Prädiktionsmodells von den tatsächlich aufgezeichneten Daten zu minimieren. Insbesondere wird das Prädiktionsmodell ebenfalls auf Reproduzierbarkeit trainiert, sodass er in einem trainierten Zustand ohne Änderung der Eingabe und der Trainingsdaten immer zu einem gleichen Ergebnis gelangt.

Insbesondere wird das Prädiktionsmodell darauf trainiert eine möglichst geringe Anzahl an Features zur Bestimmung einer durchschnittlichen Windgeschwindigkeit und einer Turbulenzintensität an einem Vorhersageort zu verwenden. Diesbezüglich ist es beispielsweise denkbar einem Prädiktionsmodell in einem untrainierten Zustand eine gewisse Anzahl an Features vorzugeben oder gewisse einzelne Features vorzugeben. Während des Trainierens ist es möglich, dass das Prädiktionsmodell die Anzahl der Features ändert, um eine genauere Vorhersage treffen zu können. Ebenso ist es denkbar, dass das Prädiktionsmodell während des Trainierens gewisse Features durch andere ersetzt um die Vorhersagegenauigkeit zu optimieren und/oder das Prädiktionsmodell möglichst kompakt zu halten.

In einem trainierten Zustand bestimmt das Prädiktionsmodell eine durchschnittliche Windgeschwindigkeit und eine Turbulenzintensität für einen Vorhersageort als Eingabe anhand einer festen Auswahl an Features, die während des Trainings optimiert wurde.

Das Prädiktionsmodell wird insbesondere darauf trainiert, anhand von Features Auswahlregeln bereitzustellen anhand derer ein Vorhersageort klassifiziert wird. Es ist dabei möglich pro Feature eine aber auch mehrere Auswahlregeln aufzustellen. Aus der Klassifikation anhand der Auswahlregeln zieht das Prädiktionsmodell Rückschlüsse auf mögliche Werte der mindestens einen statistischen Windbedingung. Werden die Auswahlregeln der Reihe nach durchlaufen, grenzt das Prädiktionsmodell mögliche Vorhersagewerte pro Auswahlregel immer weiter ein, bis das Prädiktionsmodell einen genauen Vorhersagewert für die mindestens eine statistische Windbedingung ermittelt. Je nach gewünschter Genauigkeit dieser Vorhersagewerte, benötigt das Prädiktionsmodell möglicherweise mehr Auswahlregeln und somit mehr Features, für gewöhnlich gilt: je genauer der gewünschte Vorhersagewert des Prädiktionsmodells, desto mehr Auswahlregeln benötigt das Prädiktionsmodell.

Das Prädiktionsmodell wird bevorzugt derart trainiert, dass es in einem trainierten Zustand präzise Vorhersagen für die gewünschten Windparameter innerhalb weniger Millisekunden bereitstellt. Der gesamte Prozess inklusive Laden von Daten aus Datenbanken, Berechnen der Features und der Vorhersage des Prädiktionsmodells ist dadurch innerhalb eines bestimmten Zeitraums, insbesondere weniger Minuten, beispielsweise, 30 min, 20 min, 10 min, 5 min oder 2 min möglich.

Das Erlangen eines Ziel-Vorhersageortes umfasst jegliche Art digitaler Kommunikation sowie eine manuelle Eingabe. Insbesondere wird ein Ziel-Vorhersageort aus einem CRM System erlangt. Die Abkürzung CRM steht dabei für Customer-Relationship-Management. Ein CRM System wird für systematische Gestaltung der Kundenbeziehungsprozesse herangezogen und umfasst die Dokumentation und Verwaltung von Kundenbeziehungen. Aus dem CRM System können beispielsweise die Standorte der Windenergieanlagen eines Kunden ausgelesen werden. Ebenfalls ist es möglich über das CRM System mögliche Standorte für neue Windenergieanlagen beispielsweise aus einer Kundenanfrage zu erhalten.

Der Ziel-Vorhersageort wird als Eingabe in das trainierte Prädiktionsmodell verwendet. Insbesondere werden ein Breitengrad und ein Längengrad als Koordinaten des Zielvorhersageortes als Eingabe verwendet.

Die Vorhersage der mindestens einen statistischen Windbedingung am Ziel-Vorhersageort unter Verwendung des trainierten Prädiktionsmodells geschieht anhand der festen Auswahl an Features des trainierten Prädiktionsmodells.

Insbesondere ermittelt das trainierte Prädiktionsmodell für jedes Feature der festen Auswahl an Features einen Wert für den Ziel-Vorhersageort. Anhand dieser Werte wird der Ziel-Vorhersageort für jedes Feature klassifiziert. Dadurch werden die möglichen Werte für die mindestens eine statistische Windbedingung von Feature zu Feature immer weiter eingeschränkt bis schließlich ein Ausgabewert für die vorhergesagte mindestens eine statistische Windbedingung bereitgestellt wird.

Das genaue Vorgehen des trainierten Prädiktionsmodells bei dieser Klassifikation anhand der Features kann sich zwischen verschiedenen Ausführungsformen des Prädiktionsmodells unterscheiden, beispielsweise abhängig davon, welcher ML-Algorithmus oder welches neurale Netzwerk dem Prädiktionsmodell zugrunde liegt.

Das Bereitstellen von Winddaten umfassend die mindestens eine statistische Windbedingung umfasst insbesondere ein Bereitstellen der Winddaten für das CRM System.

Die Winddaten sind dabei nicht auf die vorhergesagte mindestens eine statistische Windbedingung beschränkt, sondern können auch weitere Werte für Windparameter enthalten, die beispielsweise anhand der mindestens einen statistischen Windbedingung ermittelt wurden. Ebenso ist es denkbar, dass die Winddaten weitere Werte für Windparameter umfassen, die anhand des Ziel-Vorhersageortes ermittelt wurden. Beispielsweise ist es möglich durch topographische Karten eine Luftdichte am Ziel-Vorhersageortes näherungsweise zu bestimmen.

Die bereitgestellten Winddaten können beispielsweise bei der Planung einer Windenergieanlage berücksichtigt werden, da aus diesen Daten Rückschlüsse auf einen voraussichtlichen Ertrag der Windenergieanlage gezogen werden können.

Das erfindungsgemäße Verfahren bietet den Vorteil, dass zum Abschätzen eines potentiellen Ertrags einer geplanten Windenergieanlage keine Messungen an dem geplanten Standort notwendig sind. Zum einen spart dies Zeit, die für das Einrichten von Messinstrumenten an dem Standort anfallen würde. Zum anderen verringert das Verfahren das Fehlerpotential von Vorhersagen, da beispielsweise keine Datenübertragung von dem Messinstrument in eine Auswertungssoftware nötig ist und auch keine Messfehler auftreten können. Überdies beschleunigt das Verfahren den Abschätzungsvorgang, da für gewöhnlich die Messungen an potentiellen Standorten für Windenergieanlagen über mehrere Monate bis hin zu über ein oder mehrere Jahre durchgeführt werden, um möglichst viele alle an dem Standort auftretenden Windbedingungen aufzuzeichnen.

Gemäß einer ersten vorteilhaften Ausgestaltung des ersten Aspekts der Erfindung umfasst die mindestens eine statistische Windbedingung eine durchschnittliche Windgeschwindigkeit und eine Turbulenzintensität.

Bei der vorhergesagten durchschnittlichen Windgeschwindigkeit handelt es sich insbesondere um die durchschnittliche Windgeschwindigkeit innerhalb eines Jahres. Bei der vorhergesagten Turbulenzintensität handelt es sich insbesondere um eine ambiente Turbulenzintensität für verschiedene Windgeschwindigkeitsbereiche, beispielsweise für eine Windgeschwindigkeit von 15 m/s.

Gemäß einer bevorzugten Variante der obigen Ausgestaltung umfasst die mindestens eine statistische Windbedingung neben der durchschnittlichen Windgeschwindigkeit und der Turbulenzintensität weitere statistische Windbedingungen, insbesondere eine mittlere Windscherung, ein Weibull k-Parameters und/oder Extremwindgeschwindigkeiten über einen Zeitraum von 10 min oder Extremwindgeschwindigkeiten über einen Zeitraum von 3 s innerhalb von 50 Jahren.

Abgesehen von der vorhergesagten durchschnittlichen Windgeschwindigkeit und der vorhergesagten Turbulenzintensität werden bevorzugt weitere statistischen Windbedingungen, wie die mittlere Windscherung, den Weibull k-Parameter sowie Extremwindgeschwindigkeiten für 10 Minuten und/oder 3 s innerhalb von 50 Jahren für einen Ziel-Vorhersageort vorhergesagt.

Die mittlere Windscherung bezieht sich dabei insbesondere auf Luftschichten in einer Höhe, in der der Rotor der Windenergieanlage betrieben wird.

Der Weibull k-Parameter ist ein Maß für die Form der Windgeschwindigkeitsverteilung: Je höher k ist, desto geringer ist die Streuung der Windgeschwindigkeiten.

Es werden insbesondere Extremwindgeschwindigkeiten vorausgesagt, die über einen Zeitraum von 10 min andauern und/oder über einen Zeitraum von 3 s andauern. Hierbei beziehen sich erste auf extrem starke Windgeschwindigkeiten die über einen längeren Zeitraum von 10 min auf die Windenergieanlage wirken und letztere extrem starke Windgeschwindigkeiten, beispielsweise Böen, die lediglich über einen kürzeren Zeitraum von 3 s auf die Windenergieanlage wirken. Gemäß der standardmäßigen Betrachtung von Extremwindgeschwindigkeiten im Bereich der Windenergie werden Extremwindgeschwindigkeiten für einen Zeitraum von 50 Jahren vorhergesagt.

Gemäß einer weiteren vorteilhaften Ausgestaltung des ersten Aspekts der Erfindung werden die Winddaten am Ziel-Vorhersageort ferner unter Angabe einer Ziel-Nabenhöhe der Windenergieanlage vorhergesagt.

Das Prädiktionsmodell erlangt die Ziel-Nabenhöhe als zweiten Eingabeparameter neben dem Ziel-Vorhersageort.

Bevorzugt benötigt das Prädiktionsmodell neben dem Ziel-Vorhersageort und insbesondere der Ziel-Nabenhöhe keine weiteren Eingabeparameter um die mindestens eine statistische Windbedingung vorherzusagen.

Das Prädiktionsmodell sagt hierbei die mindestens eine Windbedingung in Abhängigkeit einer Höhe über dem Erdboden bzw. dem Meeresspiegel, abhängig davon, ob sich der Ziel-Vorhersageort auf Land oder auf See befindet, voraus. Unter Angabe einer Ziel-Nabenhöhe können somit besonders relevante Winddaten ausgegeben werden.

Die Ziel-Nabenhöhe bezieht sich dabei auf die geplante Höhe der Nabe einer geplanten Windenergieanlage oder auf die Höhe der Nabe einer bereits bestehenden Windenergieanlage über der Erdoberfläche. An Land stelle die Erdoberfläche dabei den Erdboden dar, bei Offshore-Anlagen stellt die Erdoberfläche den Meeresspiegel, insbesondere Normal Null dar.

Die Nabenhöhe lässt Rückschlüsse auf die Höhen zu, in denen der Rotor der Windenergieanlage betrieben wird. Beispielsweise können anhand der Nabenhöhe und Länge der Rotorblätter die Höhen der Luftschichten bestimmt werden, mit denen die Rotorblätter aerodynamisch interagieren. Gerade in diesen Luftschichten ist eine durchschnittliche Windgeschwindigkeit und Turbulenzintensität besonders relevant für den Ertrag der Windenergieanlage.

Für eine Vorhersage des Ertrags einer geplanten Windenergieanlage ist es somit von Vorteil Winddaten unter Angabe einer Ziel-Nabenhöhe vorherzusagen.

Gemäß einer weiteren vorteilhaften Ausgestaltung des ersten Aspekts der Erfindung ist der Vorhersageort durch eine Vielzahl standortspezifischer Marker, genannt Features, charakterisiert.

Durch die Charakterisierung des Vorhersageortes in eine Vielzahl standortspezifischer Marker klassifiziert das Prädiktionsmodell den Vorhersageort bezüglich erlernter Korrelationen zwischen standortspezifischer Marker, wie beispielsweise Höhe über Normal Null, Geländekategorie und Windlastzone, und durchschnittlicher Windgeschwindigkeit und Turbulenzintensität.

Gemäß einer bevorzugten Variante der obigen Ausgestaltung werden die standortspezifischen Marker aus öffentlich zugänglichen Ressourcen extrahiert insbesondere aus European Reanalysis (ERA5), New European Wind Atlas (NEWA), Global Wind Atlas (GWA) und Shuttle Radar Topography Mission (SRTM30).

Dies ermöglicht das Bereitstellen eines umfangreichen Datensatzes von gemessenen und/oder bestimmten Windparametern an verschiedensten Orten in verschiedensten Höhen. Insbesondere werden auch Daten bezüglich unterschiedlicher Umgebungsbedingungen wie beispielsweise Temperatur, Niederschlag und Sonneneinstrahlung aufgenommen.

Aus diesem umfangreichen Datensatz werden Trainingsdatensätze zum Trainieren des Prädiktionsmodells extrahiert. Alternativ kann auch der gesamte Datensatz einen Trainingsdatensatz für das Prädiktionsmodell darstellen.

Diese Trainingsdatensätze werden dann durch das Transformieren der Trainingsdatensätze in Features für das maschinelle Lernen vorbereitet.

Gemäß einer weiteren bevorzugten Variante der obigen Ausgestaltung werden die standortspezifischen Features unter Verwendung eines Zeitreihendatensatzes, insbesondere in stündlicher Auflösung, von wetterphysikalischen Größen berechnet, insbesondere werden die standortspezifischen Features durch eine Berechnung von Mittelwerten, Standardabweichung, Normierung und maximaler Werte der wetterphysikalischen Größen gebildet.

Insbesondere werden die standortspezifischen Features unter Verwendung eines Zeitreihendatensatzes von wetterphysikalischen Größen mit einer Gitterauflösung von 0.1° berechnet. Die Gitterauflösung von 0.1° bezieht sich auf 0.1° Breitengrad und 0.1° Längengrad. Das Gitter des Zeitreihendatensatzes besitzt also eine mindestens zwei dimensionale Ausdehnung. Da sich zumindest die 0.1° Längengrad in tatsächlicher Distanz in Kilometern abhängig von der Position auf der Erdkugel verändert, ist auch die Gitterauflösung in Kilometern variabel. Für Längen- und Breitengrade in Europa ist die Gitterauflösung etwa 31 km.

Insbesondere ist Ressource aus dem Bereich der Wetter Reanalyse (ERA5) mit detaillierten Informationen zu wetterphysikalischen Größen in stündlicher Auflösung mit einer Gitterauflösung mit 0.1° verfügbar. Aus diesem Zeitreihendatensatz werden insbesondere durch Berechnung der Mittelwerte, Standardabweichung, Normierung und maximaler Werte charakteristische Marker gebildet.

Gemäß einer weiteren vorteilhaften Ausgestaltung des ersten Aspekts der Erfindung umfassen die Features ferner eine richtungsabhängige Windgeschwindigkeitsverteilung, genannt Windrose.

Der Einbezug einer richtungsabhängigen Windgeschwindigkeitsverteilung erhöht die Genauigkeit der Vorhersage der durchschnittlichen Windgeschwindigkeit sowie der Turbulenzintensität.

Gemäß einer bevorzugten Variante der obigen Ausgestaltung umfasst die Windrose mehrere Sektoren, umfassend jeweils mindestens 30° und /oder enthält die Windrose wenigstens einen Richtungssektor nicht.

In dieser Ausgestaltung ist die Windrose also insbesondere in 12 Sektionen a 30° unterteilt. Dies resultiert in einer sehr genauen richtungsabhängigen Windgeschwindigkeitsverteilung, da bis zu 12 unterschiedliche Windrichtungen betrachtet werden.

Es ist eine Erkenntnis der Erfindung, dass sich auch die Berücksichtigung eine unvollständige Windrose, also einer Windrose, die wenigstens einen Richtungssektor nicht enthält, bereits positiv auf die Genauigkeit der Vorhersage der durchschnittlichen Windgeschwindigkeit sowie der Turbulenzintensität auswirkt.

Gemäß einer weiteren bevorzugten Variante der obigen Ausgestaltung umfasst die Windrose mehrere Sektoren, umfassend jeweils mindestens 60° und /oder enthält die Windrose wenigstens einen Richtungssektor nicht.

In dieser Ausgestaltung ist die Windrose also insbesondere in 6 Sektionen a 60° unterteilt. Dies resultiert in einer genauen richtungsabhängigen Windgeschwindigkeitsverteilung, da bis zu 6 unterschiedliche Windrichtungen betrachtet werden.

Die Betrachtung von lediglich 6 unterschiedlichen Windrichtungen anstatt beispielsweise 12 wirkt sich derart positiv auf das Prädiktionsmodell aus, als dass sich mit beispielsweise 6 Sektoren ein großer Teil der Information aus den 12 Sektoren a 30° nutzen lässt, wobei dies durch weniger Features dem Prädiktionsmodell zur Verfügung gestellt wird. Dies ist positiv, da durch eine zu große Anzahl an Features die Modellgenauigkeit wieder abnimmt.

Es ist eine Erkenntnis der Erfindung, dass sich auch die Berücksichtigung eine unvollständige Windrose, also einer Windrose, die wenigstens einen Richtungssektor nicht enthält, bereits positiv auf die Genauigkeit der Vorhersage der durchschnittlichen Windgeschwindigkeit sowie der Turbulenzintensität auswirkt.

Gemäß einer weiteren bevorzugten Variante der obigen Ausgestaltung umfasst die Windrose mehrere Sektoren, wobei die Windrose in einer Hauptwindrichtung eine größere Anzahl an Sektoren umfasst als in einer anderen Windrichtung als der Hauptwindrichtung.

Eine Hauptwindrichtung wird hierbei insbesondere anhand von Daten ermittelt, die sich über einen Zeitraum von bis zu einem Jahr erstrecken. Die Hauptwindrichtung ist insbesondere eine Windrichtung, die über eine größte Zeitspanne, verglichen mit allen anderen auftretenden Windrichtungen am Vorhersageort, an der Windenergieanlage auftritt oder eine durchschnittliche Windrichtung.

Es ist eine Erkenntnis der Erfindung, dass es vorteilhaft ist, in dieser Hauptwindrichtung eine höhere Auflösung der richtungsabhängigen Windgeschwindigkeitsverteilung anzuwenden, als in anderen Windrichtungen, da somit die Genauigkeit der Vorhersage erhöht werden kann.

Die höhere Auflösung durch eine größere Anzahl an Sektoren der Hauptwindrichtung erstreckt sich in diesem Kontext insbesondere nicht auf die Hauptwindrichtung, die beispielsweise mit einer Genauigkeit von 1° bestimmt wird, alleine, sondern erstreckt sich bevorzugt über einen Bereich von bis zu ±30° bezogen auf die Hauptwindrichtung. Dies wirkt sich positiv auf die Genauigkeit der Vorhersage aus.

Gemäß einer weiteren vorteilhaften Ausgestaltung des ersten Aspekts der Erfindung umfassen die Trainingsdatensätze Windgeschwindigkeiten in unterschiedlichen Höhen umfassen und die Features eine Windscherung, die ausgehend von den Windgeschwindigkeiten in unterschiedlichen Höhen berechnet wird.

Es werden auch für Windenergie spezifisch bereitgestellte Ressourcen verwendet (GWA & NEWA) die einige gemittelte Werte für relevante Größen wie mittlere Windgeschwindigkeit und Verteilung sowie Luftdichte in einer Gitterauflösung von 250 m oder geringer bereitstellen. Für GWA, NEWA und ERA5 werden Windgeschwindigkeiten auf verschiedenen Höhen genutzt um eine Windscherung als Marker zu berechnen.

Es wurde erkannt, dass die Genauigkeit der Vorhersage der durchschnittlichen Windgeschwindigkeit sowie der Turbulenzintensität zunimmt, wenn eine Windscherung als Feature ermittelt wird.

Gemäß einer weiteren vorteilhaften Ausgestaltung des ersten Aspekts der Erfindung umfassen die Trainingsdatensätze Höheninformationen, insbesondere basierend auf Satellitenmessungen, rund um den Vorhersageort, wobei die Features von Höheninformationen abgeleitete Größen umfassen.

Solche von den Höheninformationen abgeleitete Größen sind beispielsweise eine Höhe über Normal Null und/oder eine anhand der Höheninformation abgeschätzte Luftdichte.

Gemäß einer bevorzugten Variante der obigen Ausgestaltung umfasst die von Höheninformationen abgeleiteten Features einen Höhenunterschied zwischen dem Aufstellort und einem Vergleichsort.

Bei dem Vergleichsort handelt es sich insbesondere um eine Auslegungshöhe für die die Windenergieanlage ausgelegt wurde. Unterschiede zwischen der Auslegungshöhe und der tatsächlichen Höhe der Windenergieanlage an ihrem Standort können negative Auswirkungen auf den Ertrag und/oder auf die Windenergieanlage wirkende Lasten haben. Ein Einbezug dieses Höhenunterschieds ermöglicht somit eine genauere Abschätzung des potentiellen Ertrags einer Windenergieanlage an einem Aufstellort.

Gemäß einer besonders bevorzugten Variante der obigen Variante der obigen Ausgestaltung ist der Vergleichsort in einem vorbestimmten Abstand, insbesondere 500 oder 3000 m, in a) einer vorbestimmten Richtung, insbesondere westlicher, nordwestlicher oder nördlicher Richtung, oder b) als Mittelwert der Höhe aller Orte mit dem vorbestimmten Abstand angeordnet.

Bevorzugt ist der Vergleichsort in einem vorbestimmten Abstand in einer Richtung ±30° von der Hauptwindrichtung, besonders bevorzugt in einem vorbestimmten Abstand in Hauptwindrichtung angeordnet.

Insbesondere können so Erhebungen, beispielsweise Berge in näherer Umgebung der Windenergieanlage, die möglicherweise bei bestimmten Windrichtungen einen Windschatten auf die Windenergieanlage werfen, mit in die Vorhersage mitaufgenommen werden. Dies erhöht die Genauigkeit der Vorhersage.

Gemäß einer weiteren besonders bevorzugten Variante der obigen Variante der obigen Ausgestaltung umfassen die von Höheninformation abgeleiteten Features eine Rauheit der Oberfläche, englisch Surface Roughness.

Die Rauheit der Oberfläche ist eine Komponente der Oberflächenbeschaffenheit (Oberflächentextur). Sie wird durch die Abweichungen in der Richtung des Normalenvektors einer realen Oberfläche von ihrer idealen Form quantifiziert. Sind diese Abweichungen groß, ist die Oberfläche rau, sind sie klein, ist die Oberfläche glatt.

Diese Rauheit der Oberfläche kann sich auf die Turbulenzintensität am Standort der Windenergieanlage auswirken und beispielsweise mehr und/oder stärkere Turbulenzen hervorrufen. Ein Einbezug dieser Rauheit der Oberfläche ermöglicht eine genauere Vorhersage.

Gemäß einer weiteren vorteilhaften Ausgestaltung des ersten Aspekts der Erfindung umfasst das Transformieren der Trainingsdatensätze in Features: Transformieren der Trainingsdatensätze in eine Teilmenge der verfügbaren Features, insbesondere in eine Teilmenge mit höchstens 25 Features.

Hierbei handelt es sich um eine sogenannte Feature Subset Selection (FSS), kurz Feature Selection oder Merkmalsauswahl, welche ein Ansatz aus dem maschinellen Lernen ist, bei dem nur eine Teilmenge der verfügbaren Features für maschinelles Lernen verwendet wird. FSS ist vorteilhaft, weil es teilweise technisch sehr kompliziert ist, alle Features miteinzubeziehen oder weil es Differenzierungsprobleme gibt, wenn eine große Anzahl an Features, aber nur eine kleine Zahl an Datensätzen vorhanden ist oder um Überanpassung des Modells zu vermeiden, siehe Verzerrung-Varianz-Dilemma.

Gemäß einer weiteren vorteilhaften Ausgestaltung des ersten Aspekts der Erfindung umfasst das Prädiktionsmodell einen Entscheidungsbaum, insbesondere einen Random Forest und/oder einen Boosted Forest Algorithmus.

Insbesondere bei einem Random Forest Lagorithmus und/oder einem Boosted Random Forest Algorithmus umfasst das Prädiktionsmodell mehrere Entscheidungsbäume.

Bei diesen Entscheidungsbäumen handelt es sich vorzugsweise um geordnete, gerichtete Bäume, die der Darstellung von Entscheidungsregeln dienen. Die grafische Darstellung als Baumdiagramm veranschaulicht hierarchisch aufeinanderfolgende Entscheidungen.

Ein Entscheidungsbaum besteht dabei vorzugsweise aus einem Wurzelknoten, beliebig vielen inneren Knoten sowie mindestens zwei Blättern. Zwischen zwei Knoten gibt es vorzugsweise genau einen Pfad. Dabei repräsentiert jeder Knoten, inklusive des Wurzelknotens, eine logische Regel und jedes Blatt eine Antwort auf das Entscheidungsproblem. Um eine Klassifikation eines einzelnen Datenobjektes zu erhalten, geht man vom Wurzelknoten entlang des Baumes abwärts. Bei jedem Knoten wird mindestens ein Attribut abgefragt und eine Entscheidung über die Auswahl des folgenden Knotens getroffen. Diese Prozedur wird so lange fortgesetzt, bis man ein Blatt erreicht. Das Blatt entspricht der Klassifikation. Ein Baum enthält vorzugsweise Regeln zur Beantwortung von genau einer Fragestellung. Bei der logischen Regel handelt es sich vorzugsweise um eine mathematische Operation bezüglich eines Attributs, insbesondere um das Prüfen, ob ein gewisser Attributwert über oder unter einem Schwellwert liegt. Es ist ebenfalls möglich, dass eine logische Regel mehrere Attribute betrifft, also ein Datenobjekt anhand der Attributwerte mehrerer unterschiedlicher Attribute einem weiteren Knoten zuordnet. Hierbei ist es ebenfalls möglich, dass die logische Regel mathematische Operationen umfassend mehrere Attribute in einer mathematischen Operation betrifft, und die mehreren Attribute durch die mathematische Operation beispielsweise anhand eines Schwellwerts geprüft werden.

Bei einem binären Entscheidungsproblem gibt es für jede logische Regel, also jeden Knoten, lediglich zwei Antworten. Das erfindungsgemäße Verfahren ist jedoch nicht auf binäre Entscheidungsbäume beschränkt, sondern jeder Knoten eines Entscheidungsbaums kann eine beliebige Anzahl an Antworten auf die logische Regel des Knotens aufweisen.

Für das Bilden eines Entscheidungsbaums benötigt es einen Datensatz. Dieser Datensatz enthält vorzugsweise eine Vielzahl von einzelnen Datenobjekten, die jeweils ein oder mehrere gleiche Attribute mit vorzugsweise unterschiedlichen Attributwerten aufweisen und sich anhand dieser Attributwerte klassifizieren lassen. Zusätzlich ist die Klassifikation eines jeden Datenobjekts bekannt. Für einen Knoten des Entscheidungsbaums wird eine logische Regel basierend auf einem oder mehreren Attributen der Datenobjekte anhand der einzelnen Attributwerte aufgestellt. Anhand dieser logischen Regel lassen sich die Datenobjekte des Datensatzes an jedem Knoten in zwei oder mehrere Zustände aufteilen. Ein Zustand gibt dabei eine Teilmenge von Datenobjekten der Menge von in dem Datensatze enthaltenen Datenobjekten an. Somit beschreibt ein Zustand wiederum eine Menge von einzelnen Datenobjekten, insbesondere ein oder mehrere Datenobjekte.

Für die Bestimmung einer logischen Regel eines Knotens ist es vorteilhaft den Informationsgewinn durch die Aufteilung des Datensatzes durch die logische Regel zu betrachten. Hierfür liefert beispielsweise die Entropie ein berechenbares Maß. Die Entropie ist vorzugsweise definiert als der Erwartungswert des Informationsgehalts eines Zustands:

$$H = E[I] = \sum_{z \in Z} p_z \, I(z) = - \sum_{z \in Z} p_z \, \log_2 p_z$$

Hierbei ist $H$ die Entropie, $E$ der Erwartungswert, hier aus dem Informationsgehalt $I$, wobei $I(z) = -\log_2 p_z$ den Informationsgehalt eines Ereignisses $z$ angibt, das mit der Wahrscheinlichkeit $p_z$ eintritt. $Z$ ist die Menge aller verschiedenen Ereignisse eines Zustands.

Ein Ereignis $z$ ist vorzugsweise ein bestimmter Attributwert eines Attributes eines Datenobjekts. Zur Bestimmung der Wahrscheinlichkeit $p_z$, mit der das Ereignis $z$ eintritt, werden die verschiedenen Attributwerte dieses Attributes der Datenobjekte eines Zustands betrachtet. Die Wahrscheinlichkeit $p_z$ eines Ereignisses $z$ gibt an, wie wahrscheinlich es ist, bei einer zufälligen Auswahl eines Datenobjektes aus den Datenobjekten des Zustands ein Datenobjekt mit dem bestimmten Attributwert des Ereignisses $z$ zu ziehen. Somit kann für einen Zustand, umfassend ein oder mehrere Datenobjekte, die Entropie bestimmt werden.

Zur Berechnung des Informationsgewinns durch die Aufteilung einer Menge von einzelnen Datenobjekten anhand einer logischen Regel, werden die Entropie des Ausgangszustandes der Menge von einzelnen Datenobjekten vor der Aufteilung anhand einer logischen Regel sowie die einzelnen Entropien der durch die Aufteilung entstehenden Zustände betrachtet. Hierbei liefert beispielsweise die folgende Formel ein Maß für den Informationsgewinn:

$$IG = H(Ausgangszustand) - \sum_{i=0}^{n} w_i \, H(Zustand_i)$$

Hierbei ist *IG* der Informationsgewinn, *H* die Entropie, *n* die Anzahl aller verschiedenen Zustände nach Aufteilung der Menge von einzelnen Datenobjekten durch Anwendung der logischen Regel und $w_i$ eine Gewichtung des Zustandes $Zustand_i$ anhand der Anzahl einzelner Datenobjekte des Zustandes verglichen mit der Anzahl einzelner Datenobjekte des Ausgangszustandes, insbesondere:

$$w_i = \frac{Anzahl\ einzelner\ Datenobjekte\ des\ Zustandes\ i}{Anzahl\ einzelner\ Datenobjekte\ des\ Ausgangszustandes}$$

Somit ist es möglich ein Maß für eine logische Regel zu berechnen und verschiedene logische Regeln miteinander zu vergleichen. Je größer der Informationsgewinn nach Aufteilung der Menge an einzelnen Datenobjekten durch Anwendung der logischen Regel, desto besser ist die logische Regel.

Durch Optimierung des Informationsgewinns lässt sich somit für jeden Knoten eine bevorzugte logische Regel bestimmen. Hierbei wird insbesondere der Informationsgewinn für jede einer Vielzahl möglicher logischen Regel bestimmt und verglichen. Eine Optimierung des Informationsgewinns bei der Bestimmung einer logischen Regel für einen Knoten wirkt sich positiv auf die Größe des Entscheidungsbaumes und somit die beim Durchlaufen des Entscheidungsbaumes aufzuwendende Rechenleistung aus. Durch optimierte logische Regeln gewinnt ein Entscheidungsbaum an Kompaktheit und führt schneller zu einem Ergebnis für die Klassifikation eines neuen Datenobjekts.

Ein Entscheidungsbaum nach dem erfindungsgemäßen Verfahren umfasst somit eine oder mehrere logische Regeln, anhand denen ein Ziel-Vorhersageort anhand der Features klassifiziert werden kann. Diese Klassifikation resultiert in einer bestimmten durchschnittlichen Windgeschwindigkeit und einer bestimmten Turbulenzintensität am Ziel-Vorhersageort.

Vorzugsweise wird für das erfindungsgemäße Verfahren ein machine learning Algorithmus mit einem Datensatz trainiert. Der Datensatz beinhaltet vorzugsweise gemessene und/oder bestimmte Windparameter an verschiedensten Orten in verschiedensten Höhen.

Der machine learning Algorithmus erstellt nun vorzugsweise einen oder mehrere Entscheidungsbäume basierend auf dem Datensatz mit dem Ziel anhand der Informationen über den Ziel-Vorhersageort in Form von Features eine Klassifikation in Form der mindestens eine statistische Windbedingung, insbesondere einer vorhergesagten durchschnittlichen Windgeschwindigkeit und einer vorhergesagten Turbulenzintensität zu ermöglichen.

Die logischen Regeln werden dabei anhand der Features ausgewählt. Ein Feature nimmt dabei den Platz eines Attributes gemäß der obigen Erläuterung ein. Es werden logische Regeln betreffend Features ausgewählt, die in einem Informationsgewinn pro Knoten resultieren. Diese Auswahl logischer Regeln wird zusätzlich optimiert, sodass ein möglichst kompakter Entscheidungsbaum entsteht, der in der Lage ist präzise Vorhersagen auszugeben.

Insbesondere umfasst das Verfahren einen Random Forest Algorithmus.

Ein Random Forest Algorithmus ist ein machine learning Algorithmus, der aus mehreren unkorrelierten, insbesondere einer Vielzahl unkorrelierter Entscheidungsbäume besteht. Unkorreliert bedeutet in diesem Zusammenhang, dass die Entscheidungsbäume unabhängig voneinander nach insbesondere unterschiedlichen logischen Regeln und Datensätzen gebildet wurden. Alle Entscheidungsbäume sind unter einer bestimmten Art von Randomisierung während des Lernprozesses gewachsen. Der Lernprozess umfasst insbesondere den Prozess der Bildung eines Entscheidungsbaumes. Die einzelnen Bäume werden dann zu einem Ensemble, dem Random Forest, kombiniert. Die Ergebnisse der einzelnen Bäume werden im Ensemble mit einer Aggregierungsfunktion zusammengefasst. Vorzugsweise wird eine Aggregierungsfunktion aus: Mittelwert, Median oder Mehrheitswahl verwendet, jedoch ist die Erfindung nicht auf diese Aggregierungsfunktion beschränkt, sondern schließt auch weitere Aggregierungsfunktionen mit ein.

Für den Lernprozess des Random Forest Algorithmus wird ein wie bereits beschriebener Datensatz umfassend Informationen über gemessene und/oder bestimmte Windparameter an verschiedensten Orten in verschiedensten Höhen herangezogen. Die daraus transformierten Features stellen vorzugsweise je ein Attribut und deren Werte je einen entsprechenden Attributwert dar.

In einem vorzugsweise ersten Schritt des Lernprozesses des Random Forest Algorithmus wird in eine Vielzahl zweiter Datensätze, auch Teildatensätze, aus dem ursprünglichen Datensatz, dem Ausgangsdatensatz, erstellt. Hierfür wird pro Teildatensatz eine Anzahl an einzelnen Datenobjekten, beispielsweise einzelne Features, mit den entsprechenden Attributwerten, aus dem Ausgangsdatensatz kopiert. Welche Datenobjekte für die jeweiligen Teildatensätze gewählt werden, wird zufällig bestimmt.

Es ist von Vorteil, wenn die Gesamtanzahl an einzelnen Datenobjekten in jedem der Teildatensätze mit der Anzahl an einzelnen Datenobjekten im Ausgangsdatensatz übereinstimmt. Hierbei kann ein Datenobjekt mit entsprechenden Attributwerten in einen, mehrere aber auch keinen Teildatensatz kopiert werden. Vorzugsweise wird jedes einzelne Datenobjekt mit seinen Attributwerten mindestens in einen Teildatensatz kopiert. Es ist ebenfalls möglich, dass ein einzelnes Datenobjekt mit seinen Attributwerten mehrmals in denselben Teildatensatz kopiert wird. Insbesondere handelt es sich bei einem solchen Datenverarbeitungsprozess um einen Bootstrapping Prozess.

In einem vorzugsweise zweiten Schritt werden nun die Entscheidungsbäume des Random Forest Algorithmus gebildet. Ein entsprechender Prozess wurde bereits weiter oben erläutert. Der Unterschied ist hier, dass nicht der Ausgangsdatensatz für die Bestimmung bevorzugter logischer Regeln verwendet wird, sondern die Teildatensätze. Bevorzugt wird pro Teildatensatz ein unkorrelierter Entscheidungsbaum gebildet. Besonders bevorzugt werden dabei nicht alle in diesem Teildatensatz vorhandenen individuellen Datenobjekte für den Lernprozess des Entscheidungsbaumes herangezogen. Die individuellen einzelnen Datenobjekte, die für die Bestimmung bevorzugter logischer Regeln verwendet werden, werden vorzugsweise zufällig ausgewählt. Dies reduziert die Wahrscheinlichkeit einer möglichen Korrelation zwischen den einzelnen Entscheidungsbäumen und wirkt sich positiv auf die Genauigkeit des Algorithmus aus. Angenommen, es werden für die Bildung aller Entscheidungsbäume die gleichen Datenobjekte verwendet, steigt die Wahrscheinlichkeit, dass in verschiedenen Entscheidungsbäumen gleiche bevorzugte logische Regeln auftreten, da der Optimierungsprozess, der versucht eine bevorzugte logische Regel zu finden, den selben Datensatz verwendet. Dies fördert die Korrelation zwischen den Bäumen und führt zu ungenaueren Ergebnissen, da durch die korrelierten Entscheidungsbäume ein möglicher Pfad der Klassifikation der korrelierten Entscheidungsbäume gegenüber den vielen anderen Pfaden der unkorrelierten Entscheidungsbäume an Gewicht in der Aggregationsfunktion gewinnt. Dies trifft auch zu, wenn ein Teildatensatz für die Bildung mehrerer Entscheidungsbäume verwendet wird.

Vorzugsweise ist die Anzahl an individuellen einzelnen Datenobjekten, die für die Bestimmung bevorzugter logischer Regeln verwendet werden, eine ganze Zahl im Bereich der Wurzel aus der Anzahl der individuellen einzelnen Datenobjekte im Ausgangsdatensatz.

Im Bereich bedeutet hier, dass der Betrag der Wurzel mathematisch korrekt auf die nächste Ganzzahl gerundet wird und die Anzahl an individuellen einzelnen Datenobjekten, die für die Bestimmung bevorzugter logischer Regeln verwendet werden, insbesondere um $\pm 10$, bevorzugt um $\pm 5$, weiter bevorzugt um $\pm 3$, besonders bevorzugt um $\pm 1$ von der gerundeten Zahl abweicht. Alternativ ist es ebenfalls vorteilhaft für diese Berechnung der Anzahl an individuellen einzelnen Datenobjekten, die für die Bestimmung bevorzugter logischer Regeln verwendet werden, anstatt der Wurzelfunktion die Logarithmusfunktion zu verwenden.

Zur Klassifikation eines Ziel-Vorhersageortes werden die Entscheidungsbäume der so gebildeten Vielzahl an unkorrelierten Entscheidungsbäumen mit den Informationen der Features des Ziel-Vorhersageortes, Beispielsweise Höhe über Normal Null, Geländebeschaffenheit, durchschnittliche Umgebungstemperatur, Klimazone, durchlaufen. Jeder einzelne Entscheidungsbaum klassifiziert den Ziel-Vorhersageort. Wie bereits beschrieben werden die einzelnen Klassifikationen der einzelnen Entscheidungsbäume mithilfe einer Aggregierungsfunktion zusammengefasst und ausgewertet. Ergänzend oder alternativ wird ein Ziel-Vorhersageort anhand einer Regression des Random Forest Algorithmus inklusive Aggregierungsfunktion bestimmt.

Ein Boosted Random Forest Algorithmus kombiniert einen im Allgemeinen auch unter Gradient Boosting bekannten Algorithmus mit einem Random Forest Algorithmus.

Bei dem Boosted Random Forest Algorithmus wird mindestens einer der Entscheidungsbäume einem zusätzlichen Gradient Boosting unterzogen.

Gradient Boosting ist eine Technik des maschinellen Lernens, die auf Boosting in einem funktionalen Raum basiert, wobei das Ziel Pseudo-Residuen und nicht die typischen Residuen sind, die beim traditionellen Boosting verwendet werden. Es liefert ein Vorhersagemodell in Form eines Ensembles schwacher Vorhersagemodelle, d. h. Modelle, die nur wenige Annahmen über die Daten treffen, bei denen es sich in der Regel um einfache Entscheidungsbäume handelt. Wenn ein Entscheidungsbaum der schwache Lerner ist, wird der resultierende Algorithmus Gradient-Boosted-Trees oder Boosted Random Forest Algorithmus genannt; er stellt eine Weiterentwicklung des Random Forest Algorithmus dar und übertrifft diesen in der Regel. Ein Gradient-Boosted-Trees-Modell wird wie bei anderen Boosting-Methoden stufenweise aufgebaut, verallgemeinert aber die anderen Methoden, indem es die Optimierung einer beliebigen differenzierbaren Verlustfunktion ermöglicht.

Es ist ebenso möglich das Prädiktionsmodell auf anderen Algorithmen zu basieren, beispielsweise neuronale Netzwerke oder Support-Vektor-Maschinen. Der Random Forest Algorithmus bzw. der Boosted Random Forest Algorithmus haben sich allerdings im Kontext der Erfindung als diesen anderen Algorithmen überlegen herausgestellt.

Gemäß einer weiteren vorteilhaften Ausgestaltung des ersten Aspekts der Erfindung umfassen die bereitgestellten Winddaten eine vorhergesagte durchschnittliche Windgeschwindigkeit mit einer Genauigkeit von 0,5 m/s.

In dieser Ausgestaltung wurde das Prädiktionsmodell auf eine Genauigkeit der Vorhersage einer durchschnittlichen Windgeschwindigkeit als statistische Windbedingung von 0,5 m/s trainiert.

Gemäß einer weiteren vorteilhaften Ausgestaltung des ersten Aspekts der Erfindung weiter umfassend: Lastprognose der Windenergieanlage anhand der bereitgestellten Winddaten, und/oder Prognose eines jährlichen Ertrags der Windenergieanlage anhand der bereitgestellten Winddaten.

Hierbei werden die bereitgestellten Winddaten in ein Lastenmodell übergeben, dass anhand der Winddaten eine Lastprognose für die Windenergieanlage erstellt. Insbesondere werden hierbei Prognosen für unterschiedliche Lasten erstellt, die auf die Windenergieanlage wirken, wie Blattlasten und Turmlasten. Bevorzugt werden auch Prognosen für Torsionslasten, Schwenklasten und Biegemomente der Rotorblätter der Windenergieanlage erstellt.

Bevorzugt berücksichtigt das Lastenmodell bei der Lastenprognose Typen einzelner Komponenten der Windenergieanlage, beispielsweise einen bestimmten Rotorblatttyp für den die Windenergieanlage ausgelegt ist.

Zur Prognose eines jährlichen Ertrags der Windenergieanlage werden die Winddaten in ein Leistungsmodell übergeben, dass anhand der Winddaten eine Prognose des jährlichen Ertrags der Windenergieanlage erstellt.

Bevorzugt berücksichtigt das Leistungsmodell bei der Prognose des jährlichen Ertrags Typen einzelner Komponenten der Windenergieanlage, beispielsweise einen bestimmten Rotorblatttyp für den die Windenergieanlage ausgelegt ist.

Gemäß einer bevorzugten Variante der obigen Ausgestaltung ist die Windenergieanlage Teil eines Windparks umfassend mehrere Windenergieanlagen und das Verfahren umfasst ferner: Optimieren einer Windparkkonfiguration des Windparks anhand der Lastprognose und/oder der Prognose des jährlichen Ertrags der Windenergieanlage.

Die Windparkkonfiguration beschreibt dabei insbesondere die Arten und Standorte der einzelnen Windenergieanlagen des Windparks. Arten der Windenergieanlage umfassen beispielsweise Schwachwind- und Starkwind-Windenergieanlagen.

Die Windparkkonfiguration wird insbesondere derart optimiert, dass für eine oder mehrere Windenergieanlagen die Art und/oder der Standort geändert wird, sodass ein potentieller Gesamtertrag des Windparks erhöht und/oder eine potentielle Abnutzung einzelner Windenergieanlagen verringert wird.

Gemäß einer weiteren bevorzugten Variante der obigen Ausgestaltung umfasst das Verfahren ferner: Vorhersagen einer Lebensdauer und/oder von Wartungsintervallen mindestens einer Komponente der Windenergieanlage anhand der Lastprognose und/oder der Prognose des jährlichen Ertrags der Windenergieanlage.

Als Komponenten der Windenergieanlage sind im Kontext dieser Erfindung insbesondere Turm, Gondel, Rotorblattlager und Rotorblätter zu verstehen.

Anhand der Lastprognose und/oder der Prognose des jährlichen Ertrags der Windenergieanlage können beispielsweise Wartungsintervalle und/oder Lebensdauer der Rotorblätter prognostiziert werden.

Weitere Vorteile und Ausgestaltungen werden nachfolgend mit Verweis auf die beigefügten Figuren beschrieben. Hierbei zeigen:

Fig. 1    schematisch und exemplarisch eine Windenergieanlage;

Fig. 2    schematisch und exemplarisch einen Windpark,

Fig. 3    schematisch und exemplarisch einen Ablaufprozess eines erfindungsgemäßen Verfahrens

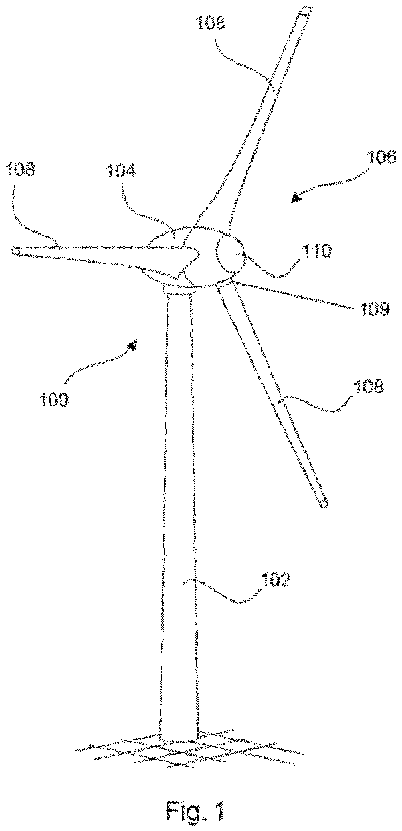

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

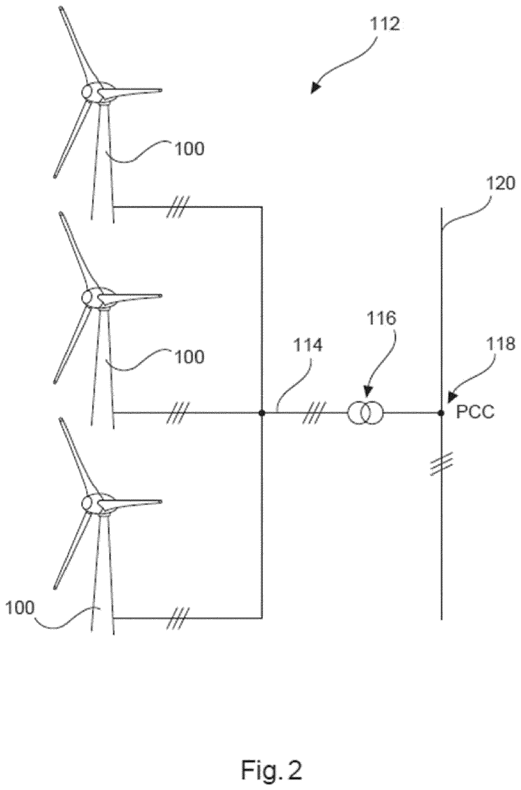

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

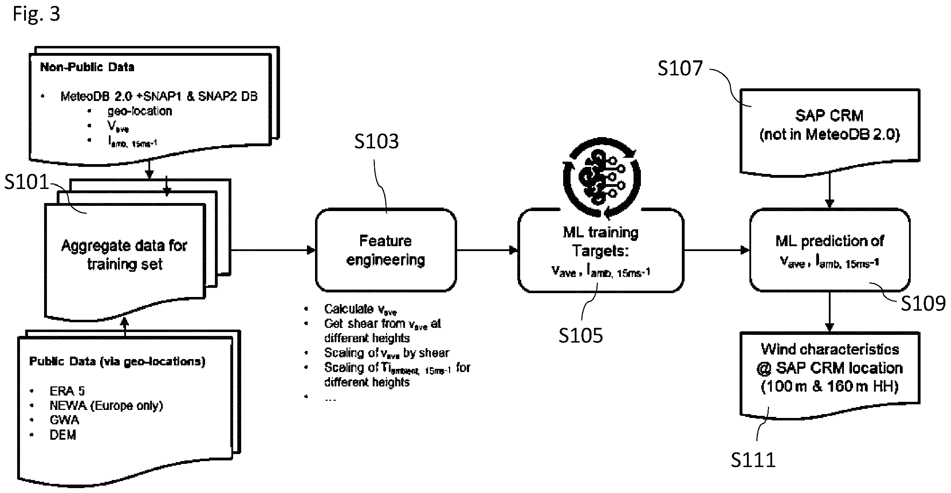

Figur 3 zeigt einen Ablaufprozess eines erfindungsgemäßen Verfahrens. In Schritt S101 werden Trainingsdatensätzen für mehrere Aufstellorte für Windenergieanlagen bereitgestellt. In dieser Ausführungsform beinhalten die Trainingsdatensätze Daten aus öffentlichen Datenbanken, genauer aus ERA 5, NEWA, GWA und DEM. Die Trainingsdaten umfassen allerdings ebenfalls nicht öffentliche Daten aus internen Datenbanken, die Messungen an Windenergieanlagen betreffen. Hierzu beinhalten die Daten den Standort der jeweiligen Windenergieanlage sowie an der Windenergieanlage gemessene Windparameter.

In Schritt S103 werden die Trainingsdatensätze für maschinelles Lernen durch Transformieren der Trainingsdatensätze in Features vorbereitet. Die Features werden hierbei auf unterschiedlichste Weise aus den Trainingsdatensätzen entwickelt. Eine durchschnittliche Windgeschwindigkeit $v_{ave}$ wird beispielsweise für mehrere Orte und mehrere Höhen berechnet. Eine Windscherung wird anhand der durchschnittlichen Windgeschwindigkeiten $v_{ave}$ in unterschiedlichen Höhen ermittelt. Anhand dieser ermittelten Windscherung kann die durchschnittliche Windgeschwindigkeit skaliert werden. Auch wird in dieser Ausführungsform eine Turbulenzintensität $Ti_{ambient, 15ms-1}$ für eine durchschnittliche Windgeschwindigkeit von 15 m/s für verschiedene Höhen skaliert. Überdies wird eine Vielzahl von weiteren Features entwickelt, die die Umgebungs- und Messbedingungen der Daten der Trainingsdatensätze abbilden.

In Schritt S105 wird ein ML-Algorithmus anhand der in Schritt S103 vorbereiteten Trainingsdatensätze auf die Vorhersage einer durchschnittlichen Windgeschwindigkeit $v_{ave}$ und einer Turbulenzintensität $I_{amb, 15ms-1}$ für eine durchschnittliche Windgeschwindigkeit von 15 m/s trainiert. Das Training kann dabei eine Vielzahl von Iterationen beinhalten. Durch Abgleich mit Daten aus den Trainingsdatensätzen werden die Ausgabeergebnisse des ML-Algorithmus kontrolliert, solange bis dieser Ergebnisse mit Abweichungen in einem vorbestimmten Bereich, bevorzugt exakte genaue Ergebnisse reproduzierbar und innerhalb einer vordefinierten Zeitspanne ausgibt. Ziel ist es eine präzise Vorhersage der gewünschten Windparameter nach Eingabe eines Vorhersageortes innerhalb weniger Minuten zu erhalten.

In Schritt S107 wird ein Ziel-Vorhersageort aus einem SAP CRM System bereitgestellt. Hierbei handelt es sich beispielsweise um einen Ort, an dem ein Kunde eine neue Windenergieanlage aufstellen will. Der Ziel-Vorhersageort wird an den trainierten ML-Algorithmus als Eingabe in Form von Koordinaten in Breitengrad und Längengrad übergeben, sodass dieser mit der Vorhersage der gewünschten Windparameter, auf die er trainiert wurde, beginnen kann.

In Schritt S109 sagt der trainierte ML-Algorithmus die durchschnittliche Windgeschwindigkeit $v_{ave}$ und die Turbulenzintensität $I_{amb, 15ms-1}$ für eine durchschnittliche Windgeschwindigkeit von 15 m/s an dem Ziel-Vorhersageort voraus.

In Schritt S111 werden Winddaten umfassend die vorhergesagte durchschnittliche Windgeschwindigkeit $v_{ave}$ und die Turbulenzintensität $I_{amb, 15ms-1}$ für eine durchschnittliche Windgeschwindigkeit von 15 m/s für das SAP CRM System bereitgestellt. In diesem Ausführungsbeispiel wurden Winddaten für Höhen von 100 m und 160 m über der Erdoberfläche an dem Ziel-Vorhersageort bereitgestellt.

Bezugszeichen

| | |
|---|---|
| 100 | Windenergieanlage |
| 102 | Turm |
| 104 | Gondel |
| 106 | Rotor |
| 108 | Rotorblatt |
| 110 | Spinner |
| 112 | Windpark |
| 114 | Parknetz |
| 116 | Transformator |
| 118 | Einspeisepunkt |
| 120 | Versorgungsnetz |

**Patentansprüche**

1. Verfahren zur Bereitstellung von Winddaten an einem Vorhersageort, umfassend

   - Bereitstellen (S101) von Trainingsdatensätzen für mehrere Aufstellorte für Windenergieanlagen, insbesondere umfassend Trainingsdatensätze aus öffentlichen Datenbanken,
   - Vorbereiten (S103) der Trainingsdatensätze für maschinelles Lernen durch Transformieren der Trainingsdatensätze in Features,
   - Trainieren (S105) eines Prädiktionsmodells zur Vorhersage mindestens einer statistischen Windbedingung an einem Vorhersageort auf Grundlage der Features,
   - Erlangen (S107) eines Ziel-Vorhersageortes, insbesondere aus einem CRM System,

    - Vorhersagen (S109) der mindestens einen statistischen Windbedingung am Ziel-Vorhersageort unter Verwendung des trainierten Prädiktionsmodells und
    - Bereitstellen (S111) von Winddaten umfassend die vorhergesagte mindestens eine statistische Windbedingung, insbesondere Bereitstellen der Winddaten für das CRM System.

2. Verfahren nach Anspruch 1, wobei die mindestens eine statistische Windbedingung eine durchschnittliche Windgeschwindigkeit und eine Turbulenzintensität umfasst.

3. Verfahren nach Anspruch 2, wobei die mindestens eine statistische Windbedingung neben der durchschnittlichen Windgeschwindigkeit und der Turbulenzintensität weitere statistische Windbedingungen umfasst, insbesondere eine mittlere Windscherung, ein Weibull k-Parameters und/oder Extremwindgeschwindigkeiten über einen Zeitraum von 10 min oder Extremwindgeschwindigkeiten über einen Zeitraum von 3 s innerhalb von 50 Jahren.

4. Verfahren nach einem der vorstehenden Ansprüche, wobei die Winddaten am Ziel-Vorhersageort ferner unter Angabe einer Ziel-Nabenhöhe der Windenergieanlage vorhergesagt werden.

5. Verfahren nach einem der vorstehenden Ansprüche, wobei der Vorhersageort durch eine Vielzahl standortspezifischer Marker, genannt Features, charakterisiert ist, wobei die standortspezifischen Marker insbesondere aus öffentlich zugänglichen Ressourcen extrahiert werden, insbesondere aus European Reanalysis (ERA5), New European Wind Atlas (NEWA), Global Wind Atlas (GWA) und Shuttle Radar Topography Mission (SRTM30).

6. Verfahren nach Anspruch 5, wobei die standortspezifischen Features unter Verwendung eines Zeitreihendatensatzes, insbesondere in stündlicher Auflösung, von wetterphysikalischen Größen berechnet werden, insbesondere werden die standortspezifischen Features durch eine Berechnung von Mittelwerten, Standardabweichung, Normierung und maximaler Werte der wetterphysikalischen Größen gebildet.

7. Verfahren nach einem der vorstehenden Ansprüche, wobei die Features ferner eine richtungsabhängige Windgeschwindigkeitsverteilung, genannt Windrose, wobei die Windrose mehrere Sektoren, umfassend insbesondere jeweils mindestens 30°, vorzugsweise mindestens 60°, umfasst, und/oder wobei die Windrose wenigstens einen Richtungssektor nicht enthält und/oder wobei die Windrose in einer Hauptwindrichtung eine größere Anzahl an Sektoren umfasst als in einer anderen Windrichtung als der Hauptwindrichtung.

8. Verfahren nach einem der vorstehenden Ansprüche, wobei die Trainingsdatensätze Windgeschwindigkeiten in unterschiedlichen Höhen umfassen und die Features eine Windscherung umfassen, die ausgehend von den Windgeschwindigkeiten in unterschiedlichen Höhen berechnet wird.

9. Verfahren nach einem der vorstehenden Ansprüche, wobei die Trainingsdatensätze Höheninformationen, insbesondere basierend auf Satellitenmessungen, rund um den Vorhersageort umfassen, wobei die Features von Höheninformationen abgeleitete Größen umfassen, wobei die von Höheninformationen abgeleiteten Features insbesondere einen Höhenunterschied zwischen dem Aufstellort und einem Vergleichsort umfassen.

10. Verfahren nach Anspruch 9, wobei der Vergleichsort in einem vorbestimmten Abstand, insbesondere 500 oder 3000 m, in a) einer vorbestimmten Richtung, insbesondere westlicher, nordwestlicher oder nördlicher Richtung, oder b) als Mittelwert der Höhe aller Orte mit dem vorbestimmten Abstand angeordnet ist.

11. Verfahren nach Anspruch 9 oder 10, wobei die von Höheninformation abgeleiteten Features eine Rauheit der Oberfläche, englisch Surface Roughness, umfassen.

12. Verfahren nach einem der vorstehenden Ansprüche, wobei das Transformieren der Trainingsdatensätze in Features umfasst:

    - Transformieren der Trainingsdatensätze in eine Teilmenge der verfügbaren Features, insbesondere in eine Teilmenge mit höchstens 25 Features.

13. Verfahren nach einem der vorstehenden Ansprüche, wobei das Prädiktionsmodell einen Entscheidungsbaum, insbesondere einen Random Forest und/oder einen Boosted Forest Algorithmus, umfasst.

14. Verfahren nach einem der vorstehenden Ansprüche, wobei die bereitgestellten Winddaten eine vorhergesagte durchschnittliche Windgeschwindigkeit mit einer Genauigkeit von 0,5 m/s umfassen.

15. Verfahren nach einem der vorstehenden Ansprüche, weiter umfassend:

- Lastprognose der Windenergieanlage anhand der bereitgestellten Winddaten, und/oder
- Prognose eines jährlichen Ertrags der Windenergieanlage anhand der bereitgestellten Winddaten, und/oder
- Vorhersagen einer Lebensdauer und/oder von Wartungsintervallen mindestens einer Komponente der Windenergieanlage anhand der Lastprognose und/oder der Prognose des jährlichen Ertrags der Windenergieanlage, wobei

die Windenergieanlage vorzugsweise Teil eines Windparks umfassend mehrere Windenergieanlagen ist und das Verfahren optional weiter aufweist:

- Optimieren einer Windparkkonfiguration des Windparks anhand der Lastprognose und/oder der Prognose des jährlichen Ertrags der Windenergieanlage.

Fig. 1

Fig. 2

Fig. 3

**Non-Public Data**

- MeteoDB 2.0 +SNAP1 & SNAP2 DB
  - geo-location
  - $V_{ave}$
  - $I_{amb, 15ms-1}$

Aggregate data for training set

S101

**Public Data** (via geo-locations)

- ERA 5
- NEWA (Europe only)
- GWA
- DEM

S103

Feature engineering

- Calculate $V_{ave}$
- Get shear from $v_{ave}$ at different heights
- Scaling of $v_{ave}$ by shear
- Scaling of $TI_{ambient, 15ms-1}$ for different heights
- ...

S105

ML training Targets:
$V_{ave}$, $I_{amb, 15ms-1}$

S107

SAP CRM
(not in MeteoDB 2.0)

S109

ML prediction of
$V_{ave}$, $I_{amb, 15ms-1}$

S111

Wind characteristics
@ SAP CRM location
(100 m & 160 m HH)

Europäisches
Patentamt

European
Patent Office

Office européen
des brevets

# EUROPÄISCHER RECHERCHENBERICHT

Nummer der Anmeldung

EP 24 16 0108

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | BILGILI ET AL: "Application of artificial neural networks for the wind speed prediction of target station using reference stations data", RENEWABLE ENERGY, PERGAMON PRESS, OXFORD, GB, Bd. 32, Nr. 14, 22. Juni 2007 (2007-06-22) , Seiten 2350-2360, XP022130629, ISSN: 0960-1481, DOI: 10.1016/J.RENENE.2006.12.001 * Zusammenfassung; Kapitel 2, 4, 5; Abbildung 3; Tabelle 3 * ----- | 1,5-7, 12,14,15 | INV. F03D17/00 ADD. F03D7/04 |
| X | EHSAN MD AMIMUL ET AL: "Wind Speed Prediction and Visualization Using Long Short-Term Memory Networks (LSTM)", 2020 10TH INTERNATIONAL CONFERENCE ON INFORMATION SCIENCE AND TECHNOLOGY (ICIST), IEEE, 9. September 2020 (2020-09-09), Seiten 234-240, XP033829895, DOI: 10.1109/ICIST49303.2020.9202300 [gefunden am 2020-09-21] | 1-3,7, 11-15 | |
| Y | * Chapter IV * ----- | 4,8-10 | RECHERCHIERTE SACHGEBIETE (IPC) F03D |
| Y | EP 2 148 225 B1 (SIEMENS AG [DE]) 2. November 2016 (2016-11-02) * Ansprüche 2,3 * ----- | 4,8-10 | |

Der vorliegende Recherchenbericht wurde für alle Patentansprüche erstellt

| Recherchenort | Abschlußdatum der Recherche | Prüfer |
|---|---|---|
| Den Haag | 11. Juli 2024 | Król, Marcin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 0108

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-07-2024

| Im Recherchenbericht angeführtes Patentdokument | Datum der Veröffentlichung | Mitglied(er) der Patentfamilie | Datum der Veröffentlichung |
|---|---|---|---|
| EP 2148225 B1 | 02-11-2016 | CA 2673160 A1 | 22-01-2010 |
| | | CN 101634722 A | 27-01-2010 |
| | | DK 2148225 T3 | 06-02-2017 |
| | | EP 2148225 A1 | 27-01-2010 |
| | | JP 2010025115 A | 04-02-2010 |
| | | NZ 577901 A | 26-03-2010 |
| | | US 2010023266 A1 | 28-01-2010 |

EPO FORM P0461

Für nähere Einzelheiten zu diesem Anhang : siehe Amtsblatt des Europäischen Patentamts, Nr.12/82